# EUROPEAN PATENT SPECIFICATION

(11) **EP 1 452 386 B1**
(45) Date of publication and mention of the grant of the patent: **13.09.2006**
(21) Application number: 03028669.4
(22) Date of filing: 16.12.2003
(51) Int. Cl.: B60N 2/28, B60R 21/20

(54) **Child seat**
Kindersitz
Siège pour enfant

(30) Priority: 25.02.2003 JP 2003047742; 16.04.2003 JP 2003111778
(43) Date of publication of application: 01.09.2004
(73) Proprietor: TAKATA CORPORATION, Minato-ku, Tokyo 106-8510 (JP)
(72) Inventor: Yoshida, Ryoichi, Tokyo 106-8510 (JP)
(74) Representative: Banzer, Hans-Jörg

(56) References cited:
- DE-A- 19 545 263
- DE-A- 19 800 078
- DE-A- 19 932 801
- DE-U- 29 606 523
- JP-A- 61 235 251
- PATENT ABSTRACTS OF JAPAN vol. 2002, no. 04, 4 August 2002 (2002-08-04) -& JP 2001 341611 A (NIPPON PLAST CO LTD), 11 December 2001 (2001-12-11)

## Description

### [Technical Field of the Invention]

The present invention relates to child seats used in, for example, automobiles, and particularly, to a child seat having an airbag that is inflated during, for example, an automobile collision to restrain a body of a child.

### [Description of the Related Art]

A typical automobile child seat has a child-seat body for seating a child and a belt for keeping the body of the child in place. Furthermore, an impact shield may be disposed over the abdominal region of the child's body (see Japanese Unexamined Patent Application Publication No. 61-235251, corresponding to US-A-4643474).

Japanese Unexamined Patent Application Publication No. 2001-341611 discloses a child seat having an airbag that is inflated during, for example, an automobile collision. In the child seat of the above-mentioned Publication, a pair of arms extends upward and forward at a slanted angle from both horizontal sides of a child-seat body. An airbag module is disposed between the two front ends of the arms. The airbag module includes a cylindrical diffuser-housing that houses an inflator, and also includes an airbag disposed around the periphery of the diffuser-housing. The child-seat body is provided with an impact sensor, and a signal from the impact sensor initiates the inflator to generate gas. The gas inflates the airbag in the forward direction in front of the entire body of the child in the child seat.

### [Problems to be Solved by the Invention]

The inflator included in the airbag module is heavy and thus increases the weight of the child seat, as in Japanese Unexamined Patent Application Publication No. 2001-341611. Furthermore, an initiating device required for the inflator increases the costs.

An object of the present invention is to provide a child seat equipped with an airbag having a simple and lightweight structure.

### [Means for Solving the Problems]

According to the present invention, this object is achieved by a child seat as defined in claim 1 or claim 6. The dependent claims define preferred or advantageous embodiments of the child seat.

A child seat according to a first embodiment of the present invention includes a child-seat body for seating a child; a restraining element disposed in front of the child seated in the child-seat body; an airbag provided in the restraining element; and inflating means for inflating the airbag. The inflating means is a gas bag which contains gas. The gas bag is disposed adjacent to the rear surface of the restraining element and is provided with gas introducing means for introducing gas inside the gas bag into the airbag when the gas pressure in the gas bag exceeds a certain value. When the body of the child presses against the gas bag and the gas pressure in the gas bag exceeds a certain value, the gas introducing means introduces the gas inside the gas bag into the airbag to inflate the airbag.

In the child seat, during an automobile collision, the child's body presses against the gas bag and the gas pressure in the gas bag exceeds a certain value to release the gas inside the gas bag into the airbag, whereby the airbag is inflated. In contrast to an inflating device having an inflator, the structure of the gas bag is significantly simple and lightweight.

In the present invention, the gas bag may contain gas of an ambient pressure, or may contain gas having pressure higher than that of the ambient gas. The latter structure allows quicker inflation of the airbag and also allows inflation to a sufficient size even if the airbag has a large volume. In this case, when the pressure in the gas bag exceeds a certain value, a section of the gas bag is torn so as to release the gas from the gas bag to the airbag. Thus, the airbag is inflated during an emergency situation of the automobile. The gas bag also functions as a cushion.

The child seat of Claim 1 may also be provided with local-bulging preventing means for preventing local bulging of the gas bag. This ensures the gas pressure in the gas bag to increase even when only a part of the gas bag is being pressed, and the gas inside the gas bag can thus be introduced into the airbag.

A child seat according to a second embodiment of the present invention includes a child-seat body for seating a child; a restraining element disposed in front of the child seated in the child-seat body; an airbag provided in the restraining element; and inflating means for inflating the airbag. The inflating means is a cushion which is disposed adjacent to the rear surface of the restraining element. The interior of the cushion and the interior of the airbag communicate with each other via a communicating part. When the body of a child presses against the cushion, the gas inside the cushion is introduced into the airbag via the communicating part to inflate the airbag.

In the child seat according to the second embodiment, the cushion receives the child's body to absorb impact during, for example, an automobile collision. In this case, the child's body presses against the cushion to release the gas inside the cushion into the airbag, thereby inflating the airbag. The airbag thus receives the head of the child. In contrast to an inflating device having an inflator, the structure of this cushion is significantly simple and lightweight. The cushion basically corresponds to the gas bag of the first embodiment.

In the child seat according to the second embodiment, local-bulging preventing means may further be provided for preventing local bulging of the cushion. This ensures that the gas inside the cushion is introduced into the airbag even when only a part of the cushion is being pressed.

Although a chest pad and an impact shield are given as examples for the restraining element of either the first or the second embodiment; the present invention is not limited to these examples.

In the present invention, the airbag may be inflated upwards along the child's chest from the restraining element to receive the head of the child. This type of an airbag has a smaller volume compared to the type that is inflated in front of the entire body of the child. For this reason, the gas bag does not require a large volume and the gas pressure in the gas bag does not need to be high. This allows the airbag to be inflated at a sufficient speed.

The present invention may further be provided with means for regulating the shape of the inflated airbag. This enables the airbag to effectively receive the body of the child. A tether strap is both simple and suitable for this inflated-airbag-shape regulating means.

The present invention may further be provided with venting means for releasing gas from the airbag to absorb impact. Although a vent hole is suitable for the venting means, the present invention is not limited to this example.

### [Brief Description of the Drawings]

Fig. 1 is a perspective view of a child seat according to an embodiment.
Fig. 2 includes schematic views of vertical cross-sections of the child seat according to the embodiment, in which (a) illustrates the airbag before the inflation and (b) illustrates the airbag after the inflation.
Fig. 3 includes schematic views of vertical cross-sections of a chest pad, in which (a) illustrates the airbag before the inflation and (b) illustrates the airbag after the inflation.
Fig. 4 is a perspective view of a child seat according to another embodiment.
Fig. 5 is a lateral view of the child seat of Fig. 4.
Fig. 6 is a vertical cross-sectional view of a chest pad of the child seat according to another embodiment.
Fig. 7 is a vertical cross-sectional view of the chest pad of Fig. 6 in which the airbag is inflated.

### [Description of the Embodiments]

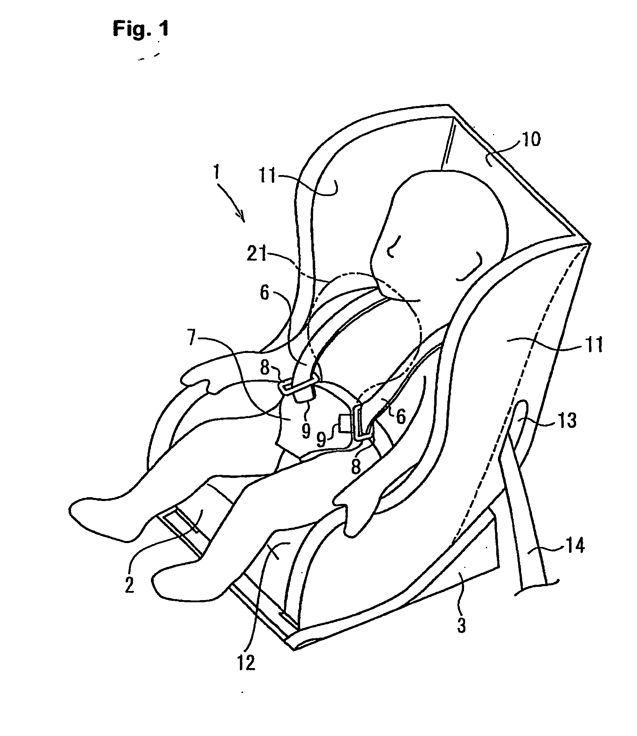

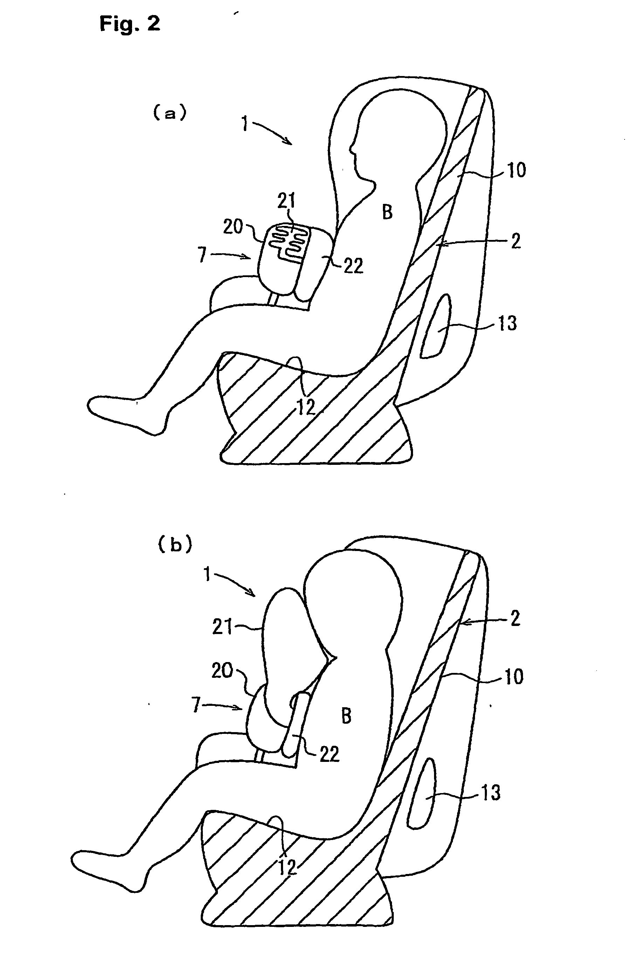

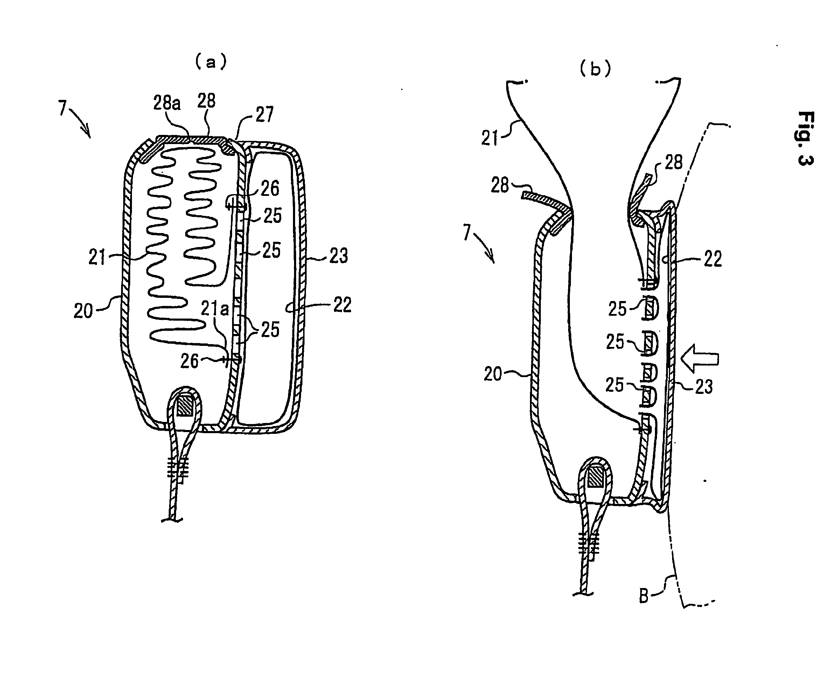

Embodiments will now be described with reference to the drawings. Fig. 1 is a perspective view of a child seat according to an embodiment. Fig. 2 includes schematic views of vertical cross-sections of the child seat describing the operation of an airbag. Fig. 3 includes schematic views of vertical cross-sections of a chest pad.

Referring to Fig. 1, a child seat 1 includes a seat body 2 for seating a child and a base 3 that supports the seat body 2 in a reclinable manner. The seat body 2 includes a seat portion 12 that supports the backside of the child; a rear portion 10 that supports the back and the head of the child; and side panels 11 that extend forward from both sides of the rear portion 10. The side panels 11 extend from both sides of the rear portion 10 to the seat portion 12.

The seat body 2 is provided with two child seatbelts 6 for restraining the child. The child seatbelts 6 are inserted through belt tongues 8. A chest pad 7 is vertically arranged in the upward direction from the front of the seat portion 12. The chest pad 7 is provided with two buckles 9 that latch the belt tongues 8.

The rear ends of the seatbelts 6 are pulled into the rear portion 10 and are rolled up against seatbelt retractors (not shown in the drawing) equipped with emergency locking mechanisms provided inside the seat body 2. The retractors become locked during an automobile collision to hold back the unwinding of the seatbelts 6. The seatbelt retractors can be omitted as desired.

The child seat 1 is set in the automobile in a manner that the child is seated facing the forward direction of the automobile. The child seat 1 is secured to the automobile seat by an adult seatbelt 14. The reference numeral 13 indicates a belt-hole through which the adult seatbelt 14 is inserted.

The child seat 1 is used by seating a child in the seat body 2, strapping the seatbelts 6 over the child, and then fastening the belt tongues 8 to the buckles 9.

Referring to Fig. 3, in this embodiment, the chest pad 7 includes a hollow casing 20; an airbag 21 folded and housed inside the casing 20; a gas bag 22 for inflating the airbag 21; and a cover shield 23 that covers the gas bag 22. The gas bag 22 is disposed on the exterior of the rear surface of the casing 20 (the surface facing the body B of the child). The rear surface of the casing 20 has holes 25 over which the gas bag 22 is disposed. The gas bag 22 contains gas with a pressure (for example, 1.5 to 3 atm) that is higher than that of the ambient gas. The gas bag 22 is formed of a synthetic-resin thin film. The cover shield 23 is formed of a semi-rigid synthetic-resin body and also of a non-woven fabric covering the surface of this body. The cover shield 23 is disposed on the rear surface of the casing 20.

The rim of a gas-receiving opening 21a of the airbag 21 is mounted on the rear surface of the casing 20 by fasteners 26. The gas-receiving opening 21a is placed over the rear surface of the casing 20 to cover the holes 25.

The top surface of the casing 20 is provided with a channel 27. The channel 27 is sealed by a cover 28 which is provided with a tearing line 28a.

In the child seat 1, when an automobile is in a collision and the body B of a child moves forward faster than a certain speed, a pressure is applied against the gas bag 22 via the cover shield 23 and the gas pressure inside the gas bag 22 exceeds a certain value. Thus, sections engaged with the holes 25 of the gas bag 22 are torn so that the gas in the gas bag 22 flows into the airbag 21 to inflate the airbag 21.

In the airbag 21, the cover 28 is pressed from its undersurface and is torn along the tearing line 28a. As shown in Fig. 2(b), the airbag 21 is then inflated upward from the chest pad 7 through the channel 27 so that the airbag 21 can receive the head of the child to absorb the impact that is given to the head and the neck of the child. The upper portion of the airbag 21 comes under the child's jaw to prevent the neck from leaning forward and to absorb impact.

The gas inside the gas bag 22 exits through the holes 25 so that the impact against the chest or the abdominal region of the child that comes in contact with the cover shield 23 is absorbed. Accordingly, the gas bag 22 also functions as a cushion.

The child seat 1 does not require an inflator or an initiating device because the airbag 21 is inflated by the gas released from the gas bag 22. Furthermore, this gas is ejected when the gas bag 22 is pressed by the child's body. Thus, the child seat 1 achieves a simple and lightweight structure.

In this embodiment, although the gas bag 22 contains gas with pressure higher than that of an ambient gas, the gas bag 22 may be alternatively filled with the ambient gas. In this case, the volume of a gas bag is made larger than the gas bag 22 in the drawing so that the airbag can be inflated to a sufficient size.

Although the airbag is being housed inside the chest pad in the above-mentioned embodiment, the airbag may alternatively be housed in other restraining elements, such as an impact shield.

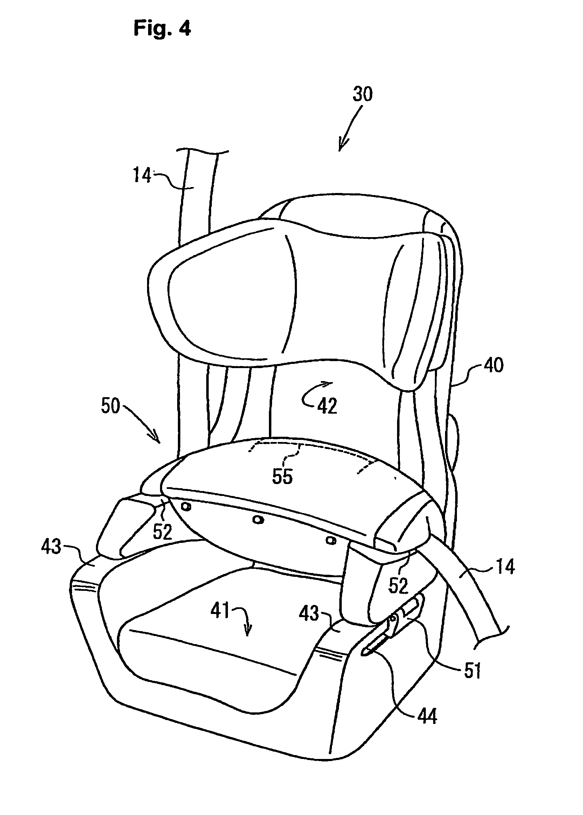

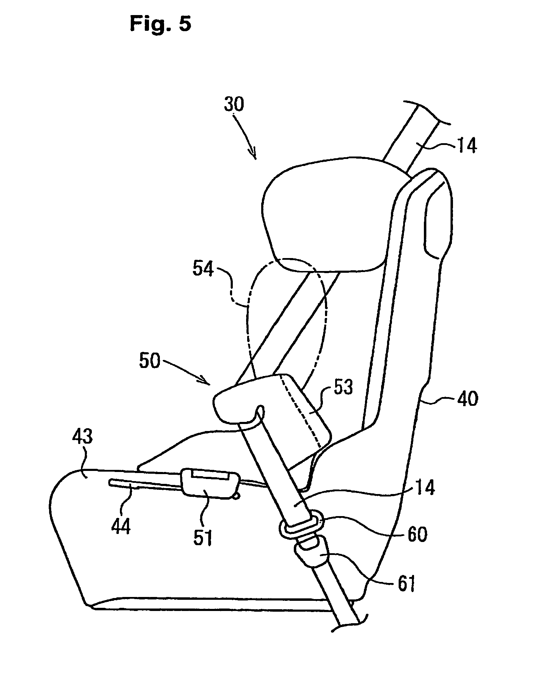

Fig. 4 is a perspective view of a child seat 30 according to another embodiment which includes an impact shield. Fig. 5 is a lateral view of the child seat 30.

The child seat 30 includes a child-seat body 40 and an impact shield 50. The child-seat body 40 includes a seat portion 41, a rear portion 42, and side panels 43 provided along the two sides of the seat. Grooves 44 are provided horizontally along the outer surfaces of the side panels 43.

The impact shield 50 is disposed over the seat portion 41 so as to bridge the two side panels 43. In the two opposite lower ends of the impact shield 50, hooks 51 are provided so as to be engaged with the grooves 44, whereby the impact shield 50 bridges between the side panels 43.

Slits 52, which are slotted from the front of the seat, are provided on both horizontal sides of the impact shield 50. An adult seatbelt 14 is pulled into and through these slits 52 so that the child seat 30 is secured to the automobile seat and that the impact shield 50 is secured to the child seat 30. A belt tongue 60 of the seatbelt 14 is fastened to a buckle 61.

A gas bag 53 is disposed along the rear surface of the impact shield 50. The gas bag 53 has a structure similar to that of the gas bag 22.

An airbag 54, which is inflated by the gas released from the gas bag 53, is disposed inside the upper portion of the impact shield 50. On the top surface of the impact shield 50, a tearing line 55 is provided which is torn open during the inflation of the airbag 54.

When an automobile is in a collision, the child's body seated in the child seat 30 presses against the gas bag 53 and the gas pressure in the gas bag 53 exceeds a certain value. The gas inside the gas bag 53 then enters the airbag 54, and the airbag 54 tears the top surface of the impact shield 50 to be inflated upward, as is shown with a two-dot chain line in Fig. 5. The inflated airbag 54 receives the head of the child and absorbs the impact.

The present invention may include an inflated-airbag-shape regulating means for regulating the shape of the inflated airbag; venting means for releasing gas from the inflated airbag to absorb impact; or local-bulging preventing means for preventing local bulging of the gas bag when the gas bag is being pressed.

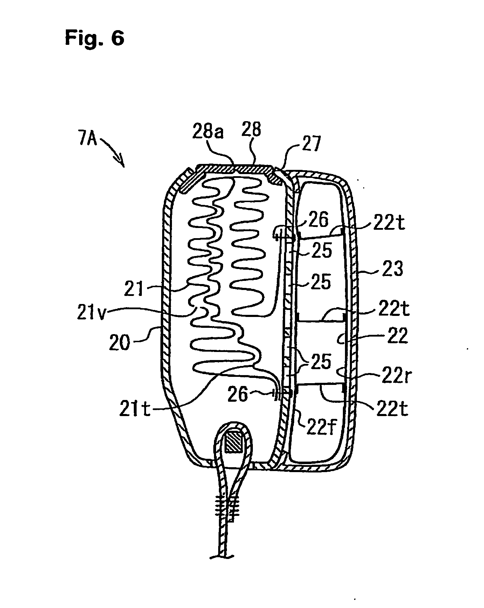

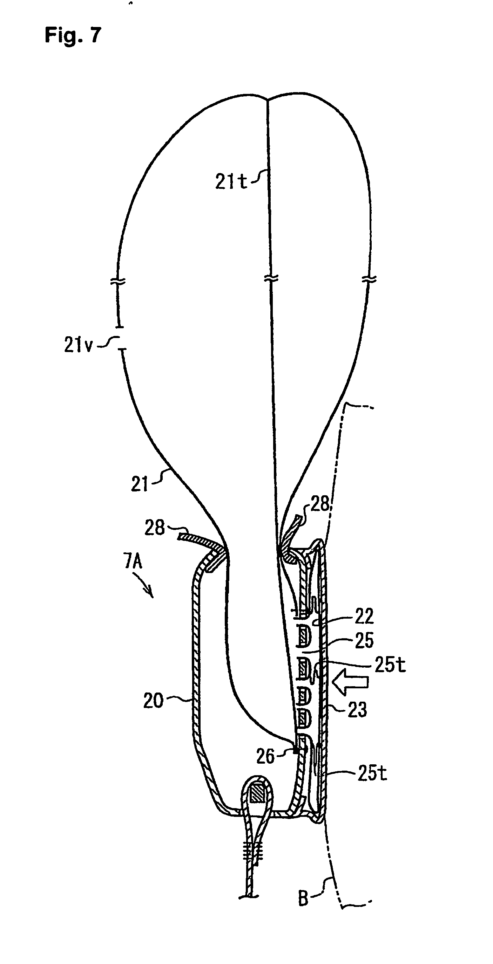

Fig. 6 and Fig. 7 are cross-sectional views of a chest pad 7A of the child seat, including an airbag tether strap as the inflated-airbag-shape regulating means, a vent hole as the venting means, and a gas-bag tether strap as the local-bulging preventing means. Fig. 6 corresponds to Fig. 3(a), and Fig. 7 corresponds to Fig. 3(b).

In the chest pad 7A, the front end of an airbag tether strap 21t is connected to a part of the airbag 21 that becomes the top when the airbag 21 is inflated. The back end of the tether strap 21t is connected to the rear surface of the casing 20 by one of the fasteners 26. The tether strap 21t has a long, belt-like structure and its front end is attached to the top of the airbag 21 by attaching means such as stitching or bonding.

Although only one tether strap 21t is described in this embodiment, two or more straps may be provided. Furthermore, the tether straps may not only be provided vertically along the airbag 21, but also longitudinally or laterally in the horizontal direction of the airbag 21.

A vent hole 21v is provided in a part of the airbag 21 that becomes the part above the casing 20 and in the front surface of the airbag 21 when the airbag 21 is inflated. Only one vent hole 21v may be provided, or alternatively, two or more vent holes 21v can be provided. The vent hole 21v may also have pressure-maintaining means, such as a film, that seals the vent hole 21v until the pressure inside the airbag 21 reaches a specific value and opens (for example, breaks open) the film when the pressure inside the airbag 21 exceeds the value.

In this embodiment, the front surface 22f of the gas bag 22 (the surface facing the casing 20) and the rear surface 22r (the surface facing the child) are coupled together by gas-bag tether straps 22t. The tether straps 22t are formed of, for example, synthetic resin or an impregnated fabric with synthetic resin. The ends of the straps 22t are attached to the front surface 22f and the rear surface 22r by bonding. The material and the bonding method of the tether straps 22t, however, are not limited to the examples described above.

In this embodiment, although three tether straps 22t are illustrated in the drawings, the number of the straps 22t is not limited. Furthermore, the straps 22t may not only be disposed laterally across the gas bag, but also longitudinally or vertically across the gas bag.

The remaining structures in the child seat 7A shown in Figs. 6 and 7 are the same as in the child seat 7 shown in Figs. 1 to 3.

In the child seat 1 having the chest pad 7A with the structure described above, when an automobile is in a collision and the body B of a child moves forward faster than a certain speed, a pressure is applied against the gas bag 22 via the cover shield 23 and the gas pressure inside the gas bag 22 exceeds a certain value. Thus, sections engaged with the holes 25 of the gas bag 22 are torn so that the gas inside the gas bag 22 flows into the airbag 21 to inflate the airbag 21. As is shown in Fig. 7, the airbag 21 is inflated until the tether strap 21t is stretched. In this case, the maximum height of the inflated airbag 21 is regulated by the tether strap 21t.

The inflated airbag 21 receives the head of the child to absorb the impact that is given to the head and the neck of the child. The upper portion of the airbag 21 comes under the child's jaw to prevent the neck from leaning forward and to absorb impact.

When the child's body is pressed against the airbag 21, the gas inside the airbag 21 is released through the vent hole 21v so that the airbag 21 can absorb impact. Furthermore, the gas inside the gas bag 22 is released through the holes 25 so that the impact against the chest or the abdominal region of the child that comes in contact with the cover shield 23 is absorbed.

As described above, the chest pad 7A is provided with the gas-bag tether straps 22t in the gas bag 22. In the state of the chest pad 7A shown in Fig. 6, when only the lower portion or only the upper portion of the cover shield 23 is being pressed locally, the tether straps 22t prevent the local bulging of the upper portion or the lower portion of the gas bag 22. Consequently, the pressure in the gas bag 22 increases according to this pressing force even when only a part of the gas bag 22 is being pressed. When this pressing force exceeds a certain amount, the pressure in the gas bag 22 steadily increases to exceed a specific value, thereby tearing the gas bag 22 to introduce the gas into the airbag 21.

As Figs. 6 and 7 illustrate the airbag and the gas bag of the child seat of Figs. 1 to 3 provided with the tether straps and the vent hole, the airbag 54 and the gas bag 53 of the child seat of Figs. 4 and 5 may similarly be provided with the tether straps and the vent hole.

In each of the above-described embodiments, a hollow cushion may be used in place of the gas bag and may be disposed along the rear surface of chest pad or along the rear surface of the impact shield. Furthermore, the cushion and the airbag may communicate with each other via a communicating part. In this case, in an automobile collision, the cushion receives the body of a child to absorb impact and is pressed by the body of the child to release the gas inside the cushion into the airbag via the communicating part. The airbag is thus inflated to receive the head of the child.

### [Advantages]

As described above, the present invention provides a child seat equipped with an airbag having a simple and lightweight structure.

## Claims

1. A child seat (1; 30) comprising:
a child-seat body (2; 40) for seating a child (B);
a restraining element (7; 50) disposed in front of the child (B) seated in the child-seat body (2; 40);
an airbag (21; 54) provided in the restraining element (7; 50); and
inflating means for inflating the airbag (21; 54), **characterized in that**
the inflating means comprises a gas bag (22; 53) containing gas, the gas bag (22; 53) being disposed adjacent to the rear surface of the restraining element (7; 50);
the gas bag (22; 53) comprises gas introducing means (25) for introducing the gas inside the gas bag (22; 53) into the airbag (21; 54) when the gas pressure in the gas bag (22; 53) exceeds a predetermined value; and
when the gas bag (22; 53) is pressed by the body (B) of the child and when the gas pressure in the gas bag (22; 53) exceeds the predetermined value, the gas introducing means (25) introduces the gas inside the gas bag (22; 53) into the airbag (21; 54) to inflate the airbag (21; 54).

2. The child seat (1; 30) according to Claim 1, wherein the gas contained in the gas bag (21; 54) has an ambient pressure.

3. The child seat (1; 30) according to Claim 1, wherein the gas contained in the gas bag (21; 54) has pressure higher than that of an ambient gas.

4. The child seat (1; 30) according to any one of Claim 1 to Claim 3, wherein a section of the gas bag (21; 54) is torn when the pressure in the gas bag (21; 54) exceeds the predetermined value so that the gas inside the gas bag (21; 54) is released into the airbag (21; 54).

5. The child seat (1; 30) according to any one of Claim 1 to Claim 4, further comprising local-bulging preventing means (22t) for preventing local bulging of the gas bag (22).

6. A child seat (1; 30) comprising:
a child-seat body (2; 40) for seating a child (B);
a restraining element (7; 50) disposed in front of the child (8) seated in the child-seat body (2; 40);
an airbag (21; 54) provided in the restraining element; and
inflating means for inflating the airbag (21; 54),
**characterized in that**
the inflating means comprises a hollow cushion (22; 53) containing air and disposed adjacent to the rear surface of the restraining element (7; 50), the interior of the cushion (22; 53) communicating with the interior of the airbag (21; 54) via a communicating part (25); and
when the cushion (22; 53) is pressed by the body (B) of the child, the air inside the cushion (22; 53) is introduced into the airbag (21; 54) via the communicating part (25) to inflate the airbag (21; 54).

7. The child seat according to Claim 6, further comprising local-bulging preventing means (22t) for preventing local bulging of the cushion (22).

8. The child seat (1; 30) according to any one of Claim 1 to Claim 7, wherein the restraining element (7; 50) comprises a chest pad (7) or an impact shield (50).

9. The child seat (1; 30) according to any one of Claim 1 to Claim 8, wherein the airbag (21; 54) is inflated upward along the child's chest from the restraining element (7; 50) to receive the head of the child (B).

10. The child seat (1; 30) according to any one of Claim 1 to Claim 9, further comprising inflated-airbag-shape regulating means (21t) for regulating the shape of the inflated airbag (21).

11. The child seat (1; 30) according to Claim 10, wherein the inflated-airbag-shape regulating means comprises a tether strap (21t).

12. The child seat (1; 30) according to any one of Claim 1 to Claim 11, further comprising venting means (21v) for releasing the gas or air, respectively, from the airbag (21).

## Patentansprüche

1. Kindersitz (1; 30) umfassend:
einen Kindersitzkörper (2; 40) zum Setzen eines Kindes (B);
ein Rückhalteelement (7; 50), welches vor dem Kind (B), das in den Kindersitzkörper (2; 40) gesetzt ist, angeordnet ist;
einen Airbag (21; 54), welcher in dem Rückhalteelement (7; 50) vorgesehen ist; und
Aufblasmittel zum Aufblasen des Airbags (21; 54),
**dadurch gekennzeichnet,**
**dass** das Aufblasmittel einen Gassack (22; 53), welcher Gas enthält, umfasst, wobei der Gassack (22; 53) benachbart zu der hinteren Oberfläche des Rückhalteelements (7; 50) angeordnet ist;
wobei der Gassack (22; 53) gaseinführende Mittel (25) zum Einführen des Gases innerhalb des Gassacks (22; 53) in den Airbag (21; 54) umfasst, wenn der Gasdruck in dem Gassack (22; 53) einen vorbestimmten Wert überschreitet; und
wobei, wenn der Gassack (22; 53) von dem Körper (B) des Kindes gedrückt wird und wenn der Gasdruck in dem Gassack (22; 53) den vorbestimmten Wert überschreitet, das Gaseinführungsmittel (25) das Gas innerhalb des Gassacks (22; 53) in den Airbag (21; 54) einführt, um den Airbag (21; 54) aufzublasen.

2. Kindersitz (1; 30) gemäß Anspruch 1, wobei das Gas, welches in dem Gassack (22; 53) enthalten ist, einen Umgebungsdruck aufweist.

3. Kindersitz (1; 30) gemäß Anspruch 1, wobei das Gas, welches in dem Gassack (22; 53) enthalten ist, einen höheren Druck als der eines Umgebungsgases aufweist.

4. Kindersitz (1; 30) gemäß einem der Ansprüche 1-3, wobei ein Abschnitt des Gassacks (22; 53) zerrissen wird, wenn der Druck in dem Gassack (22; 53) den vorbestimmten Wert überschreitet, so dass das Gas innerhalb des Gassacks (22; 53) in den Airbag (21; 54) abgegeben wird.

5. Kindersitz (1; 30) gemäß einem der Ansprüche 1-4, welcher ferner lokale Auswölbungsverhinderungsmittel (22t) zum Verhindern lokaler Auswölbungen des Gassacks (22) umfasst.

6. Kindersitz (1; 30) umfassend:
einen Kindersitzkörper (2; 40) zum Setzen eines Kindes (B);
ein Rückhalteelement (7; 50), welches vor dem Kind (B), das in dem Kindersitzkörper (2; 40) gesetzt ist, angeordnet ist;
einen Airbag (21; 54), welcher in dem Rückhalteelement vorgesehen ist, und
Aufblasmittel zum Aufblasen des Airbags (21; 54),
**dadurch gekennzeichnet,**
**dass** das Aufblasmittel ein hohles Polster (22; 53) umfasst, welches Luft enthält und benachbart zu der hinteren Oberfläche des Rückhalteelements (7; 50) angeordnet ist, wobei das Innere des Polsters (22; 53) mit dem Inneren des Airbags (21; 54) über einen Verbindungsteil (25) verbunden ist; und
wobei, wenn das Polster (22; 53) von dem Körper (B) des Kindes gedrückt wird, die Luft innerhalb des Polsters (22; 53) über das Verbindungsteil (25) in den Airbag (21; 54) eingeführt wird, um den Airbag (21; 54) aufzublasen.

7. Kindersitz gemäß Anspruch 6, welcher ferner lokale Auswölbungsverhinderungsmittel (22t) zum Verhindern lokaler Auswölbungen des Polsters (22) umfasst.

8. Kindersitz (1; 30) gemäß einem der Ansprüche 1-7, wobei das Rückhalteelement (7; 50) ein Brustkissen (7) oder einen Aufprallschutzschild (50) umfasst.

9. Kindersitz (1; 30) gemäß einem der Ansprüche 1-8, wobei der Airbag (21; 54) nach oben entlang der Brust des Kindes von dem Rückhalteelement (7; 50) aufgeblasen wird, um den Kopf des Kindes (B) aufzunehmen.

10. Kindersitz (1; 30) gemäß einem der Ansprüche 1-9, welcher ferner Einstellmittel für eine Form eines aufgeblasenen Airbags (21t) zum Einstellen der Form des aufgeblasenen Airbags (21) umfasst.

11. Kindersitz (1; 30) gemäß Anspruch 10, wobei das Einstellmittel für eine Form eines aufgeblasenen Airbags ein Haltegurtband (21t) umfasst.

12. Kindersitz (1; 30) gemäß einem der Ansprüche 1-11, welcher ferner Lüftungsmittel (21v) zum Freisetzen des Gases bzw. der Luft aus dem Airbag (21) umfasst.

## Revendications

1. Siège pour enfant (1 ; 30) comprenant :
- un corps de siège pour enfant (2 ; 40) pour asseoir un enfant (B) ;
- un élément de retenue (7 ; 50) disposé en face de l'enfant (B) assis dans le corps de siège pour enfant (2 ; 40) ;
- un coussin de sécurité gonflable (21 ; 54) prévu dans l'élément de retenue (7 ; 50) ; et
- des moyens de gonflage pour gonfler le coussin de sécurité gonflable (21 ; 54),
**caractérisé en ce que** :
- les moyens de gonflage comprennent un sac de gaz (22 ; 53) contenant du gaz, le sac de gaz (22 ; 53) étant disposé de manière adjacente à la surface arrière de l'élément de retenue (7 ; 50) ;
- le sac de gaz (22 ; 53) comprend des moyens d'introduction de gaz (25) pour introduire le gaz à l'intérieur du sac de gaz (22 ; 53) dans le coussin de sécurité gonflable (21 ; 54) lorsque la pression de gaz dans le sac de gaz (22 ; 53) dépasse une valeur prédéterminée ; et
- lorsque le sac de gaz (22 ; 53) est comprimé par le corps (B) de l'enfant et lorsque la pression de gaz dans le sac de gaz (22 ; 53) dépasse la valeur prédéterminée, les moyens d'introduction de gaz (25) introduisent le gaz à l'intérieur du sac de gaz (22 ; 53) dans le coussin de sécurité gonflable (21 ; 54) pour gonfler le coussin de sécurité gonflable (21 ; 54).

2. Siège pour enfant (1 ; 30) selon la revendication 1, dans lequel le gaz contenu dans le sac de gaz (21 ; 54) a une pression ambiante.

3. Siège pour enfant (1 ; 30) selon la revendication 1, dans lequel le gaz contenu dans le sac de gaz (21 ; 54) a une pression supérieure à celle d'un gaz ambiant.

4. Siège pour enfant (1 ; 30) selon l'une quelconque de la revendication 1 à la revendication 3, dans lequel une section du sac de gaz (21 ; 54) est déchirée lorsque la pression dans le sac de gaz (21 ; 54) dépasse la valeur prédéterminée de sorte que le gaz à l'intérieur du sac de gaz (21 ; 54) est libéré dans le coussin de sécurité gonflable (21 ; 54).

5. Siège pour enfant (1 ; 30) selon l'une quelconque de la revendication 1 à la revendication 4, comprenant en outre des moyens de prévention de renflement local (22t) pour empêcher le renflement local du sac de gaz (22).

6. Siège pour enfant (1 ; 30) comprenant :
- un corps de siège pour enfant (2 ; 40) pour asseoir un enfant (B) ;
- un élément de retenue (7 ; 50) disposé en face de l'enfant (B) assis dans le corps de siège pour enfant (2 ; 40) ;
- un coussin de sécurité gonflable (21 ; 54) prévu dans l'élément de retenue ; et
- des moyens de gonflage pour gonfler le coussin de sécurité gonflable (21 ; 54),
**caractérisé en ce que** :
- les moyens de gonflage comprennent un coussin creux (22 ; 53) contenant l'air et disposé de manière adjacente à la surface arrière de l'élément de retenue (7 ; 50), l'intérieur du coussin (22 ; 53) communiquant avec l'intérieur du coussin de sécurité gonflable (21 ; 54) via une partie de communication (25) ; et
- lorsque le coussin (22 ; 53) est comprimé par le corps (B) de l'enfant, l'air à l'intérieur du coussin (22 ; 53) est introduit dans le coussin de sécurité gonflable (21 ; 54) via la partie de communication (25) pour gonfler le coussin de sécurité gonflable (21 ; 54).

7. Siège pour enfant selon la revendication 6, comprenant en outre des moyens de prévention de renflement local (22t) pour empêcher le renflement local du coussin (22).

8. Siège pour enfant (1 ; 30) selon l'une quelconque de la revendication 1 à la revendication 7, dans lequel l'élément de retenue (7 ; 50) comprend un coussinet de poitrine (7) ou une protection contre les chocs (50).

9. Siège pour enfant (1 ; 30) selon l'une quelconque de la revendication 1 à la revendication 8, dans lequel le coussin de sécurité gonflable (21 ; 54) est gonflé vers le haut le long de la poitrine de l'enfant à partir de l'élément de retenue (7 ; 50) pour recevoir la tête de l'enfant (B).

10. Siège pour enfant (1 ; 30) selon l'une quelconque de la revendication 1 à la revendication 9, comprenant en outre des moyens de régulation de forme de coussin de sécurité gonflable gonflé (21t) pour réguler la forme du coussin de sécurité gonflable (21) gonflé.

11. Siège pour enfant (1 ; 30) selon la revendication 10, dans lequel des moyens de régulation de forme coussin de sécurité gonflable gonflé comprennent une sangle d'attache (21 t).

12. Siège pour enfant (1 ; 30) selon l'une quelconque de la revendication 1 à la revendication 11, comprenant en outre des moyens d'évacuation (21v) pour libérer le gaz ou l'air, respectivement, du coussin de sécurité gonflable (21).
